# EUROPEAN PATENT APPLICATION

(11) **EP 3 384 763 A1**
(43) Date of publication of application: **10.10.2018**
(21) Application number: 18165462.5
(22) Date of filing: 03.04.2018
(51) Int. Cl.: A01K 1/02

(54) **PET CARRIER**

(30) Priority: 06.04.2017 IT 201700038155 U
(71) Applicant: MPS 2 SRL, 36051 Creazzo (VI) (IT)
(72) Inventor: Tamiozzo, Giovanni Battista, 36050 Vicenza (IT)
(74) Representative: Bettello, Pietro

(57) **Abstract**

This finding relates to a pet carrier, of the type comprising two half-shells (1, 2) of substantially identical shape and sizes, to be arranged so that they mutually face the respective concavities, said half-shells (1, 2) forming the two halves of a carrier (100), being provided that the two half-shells (1, 2), once arranged mutually on top of each other, form a substantially parallelepiped-shaped structure, at least one of the two half-shells having a resealable gap that can be closed by means of a door (8), or a grating or the like, being also provided means which allow the mutual reversible fastening of said two half-shells (1, 2). Said carrier (100) is characterized in that the two half-shells (1, 2) are substantially symmetrical with respect to a plane that intersects side faces (4) of the carrier (100) along a diagonal (7) thereof, and also in that the door (8), the grating or the like extends for the most part in correspondence with one of the largest faces of the half-shell (1), said door (8) being reversibly fastened to said half-shell (1).

## Description

The present finding relates to a pet carrier, according to the general part of claim 1.

Most pet carriers have two half-shells having substantially identical shape and sizes, in most cases made of plastic, which are arranged so as the respective concavities mutually face each other; in practice, said half-shells form the two halves of the carrier. Once arranged mutually on top of each other, they form a substantially parallelepiped structure. In particular, it is provided for at least one of said two half-shells to have a gap for introducing and/or removing the animal or animals into/from the carrier. Naturally a door, a grating or the like, is also provided, which once opened, obviously allows such an introduction or removal and which once closed, precisely allows the closing of the carrier, thus preventing the animal or the animals therein contained from coming out of the carrier, unless upon explicit will of the user of the carrier itself.

Quite often, these carriers provide hinge elements or the like at an edge of mutual contact between the two half-shells, which hinge elements allow the complete opening and closing of the carrier by rotating about the axis of said edge; vice versa, there are hooking means which are capable of ensuring the reversible closing of the carrier at the edge opposite to the one on which there are the hinges.

In an alternative manner, certain carriers are equipped with mutual hooking means of the two half-shells at a pair of opposite edges of the two half-shells, said hooking means here also being capable of reversibly allowing the opening and closing of the carrier.

An example of such carrier may be the one mentioned in the European document EP2387879 B, of the same applicant of the present application.

Other documents of the state of the art are US 2002/092477, US 4852520 and US 2008/174946.

Object of the present invention is to realize a pet carrier of the type described above, which is both particularly easy to make and convenient to use, and which once made with particular sizes, may be arranged in an airplane cabin, naturally with companies that allow small animals with a carrier in the cabin, in particular the aforesaid carrier being arrangeable under the seat in front of the one of the passenger using said carrier.

According to the finding, this is obtained by conforming such pet carrier to the characteristics of the characterizing part of claim 1.

Particular embodiments of such carrier are described in the dependent claims.

These and other characteristics of the finding are described in detail below, with reference to a particular embodiment thereof, made by way of a non-limiting example, with the aid of the accompanying drawings, where:
- fig. 1 shows an overall perspective view of the carrier of the finding;
- fig. 2 shows a top plan view of the aforesaid;
- fig. 3 shows a top view, in conditions of actual operation of the carrier, of one of the two half-shells of the aforesaid, without the closing/opening door;
- fig. 4 shows a view from the outside of the aforesaid half-shell, without the closing/opening door also in this case;

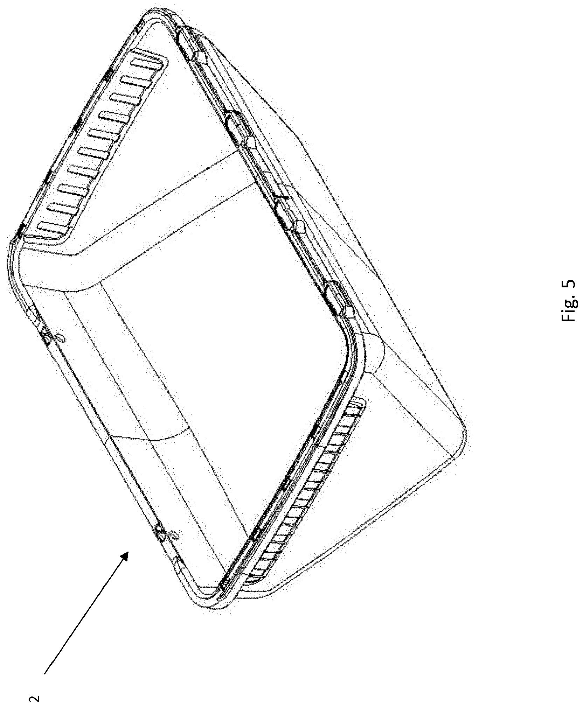

- fig. 5 shows a view from the inside, in conditions of actual operation of the carrier, of the other half-shell of the aforesaid;
- figures 6 and 7 show two overall perspective views of the carrier of the finding, illustrating two different methods of opening of the door, grating or the like.

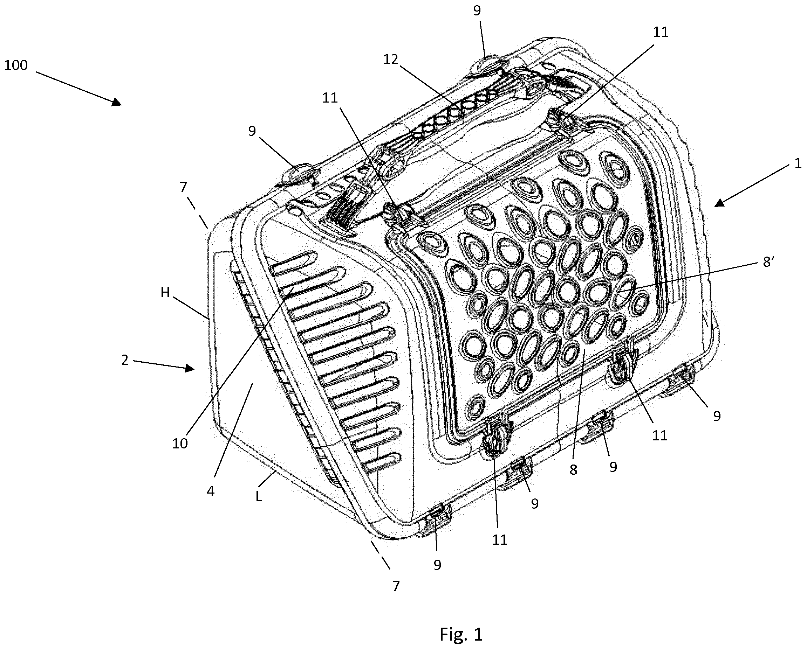

As shown in the accompanying drawings, the carrier, overall indicated with reference 100, of the present finding is made by means of two half-shells 1 and 2 of substantially identical shape and sizes, which mutually face each other with the respective concavities thereof, and which form the two halves of the carrier 100. Once arranged mutually on top of each other, the two half-shells 1 and 2 form a substantially parallelepiped structure, as shown in fig. 1.

Said figure also shows how, according to the finding, such two half-shells 1 and 2 are substantially symmetrical with respect to a plane that intersects the side faces 4 and 5 of the carrier 100 along a diagonal 7 thereof. Moreover, in figure 1 it is important to be noticed that the two half-shells 1 and 2 are mutually connected to hinge closing means 9, placed at the two mating edges of said half-shells. Vice versa, said hinge closing means 9, apt to cause the mutual reversible fastening of said half-shells 1 and 2, are located at the two mating edges opposite to the first of said two half-shells 1 and 2. The hinge closing means 9 of the half-shells 1 and 2 may be of any type, in particular they may be of the type described in the European Patent EP 2387879 of the same applicant.

In particular, in at least one of the two half-shells 1 and 2, a plurality of slits 10 is advantageously present, in order to allow a better ventilation inside the carrier and for the complete benefit of the wellbeing of the animal in the carrier.

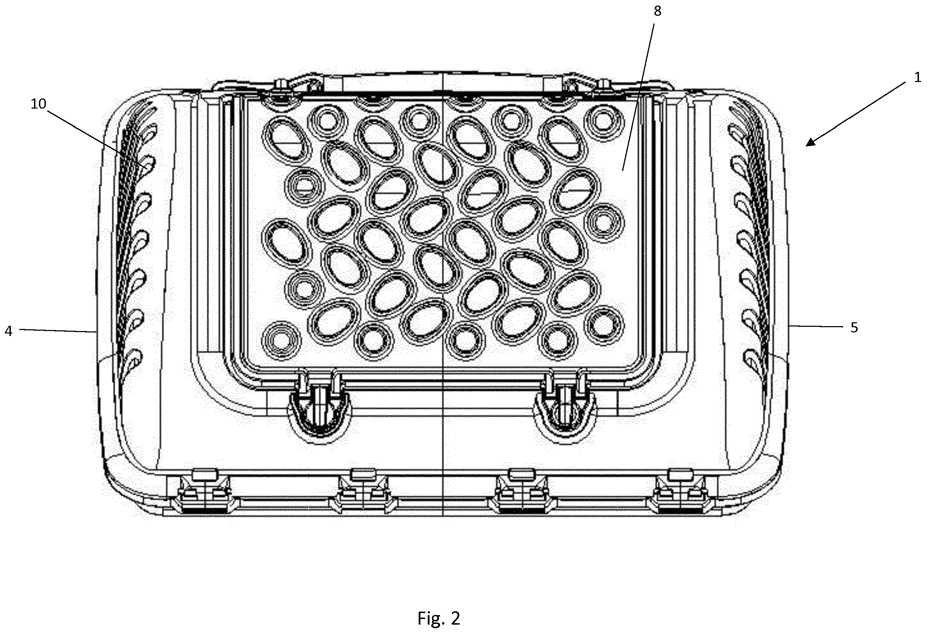

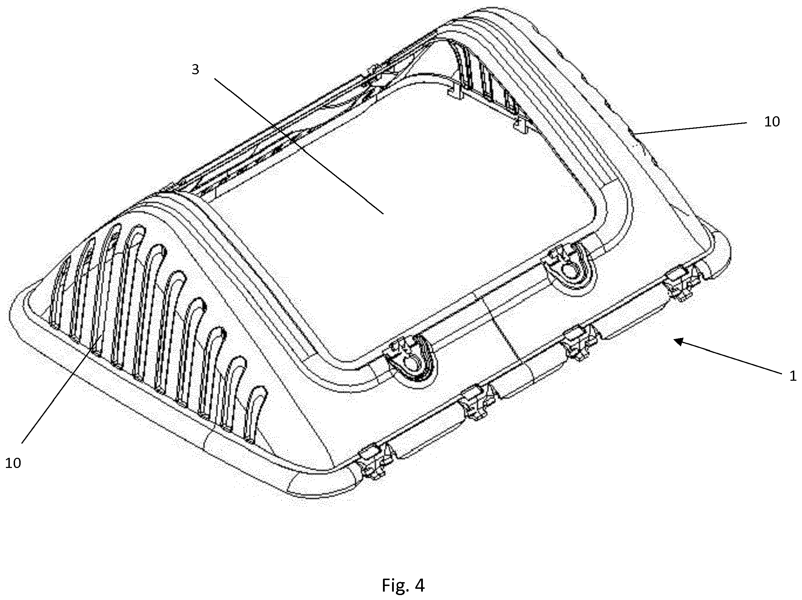

This is quite visible in particular in figure 4, which shows that there is also a gap 3 in said half-shell 1 that can be closed by means of a door 8 (see in particular figures 1 and 2) that can be reversibly fixed to said carrier to allow the opening and the closing of the carrier 100 itself up to allowing the introduction of the animal therein, the keeping of the animal in the carrier 100, but also the exiting thereof, all according to the desires of the user.

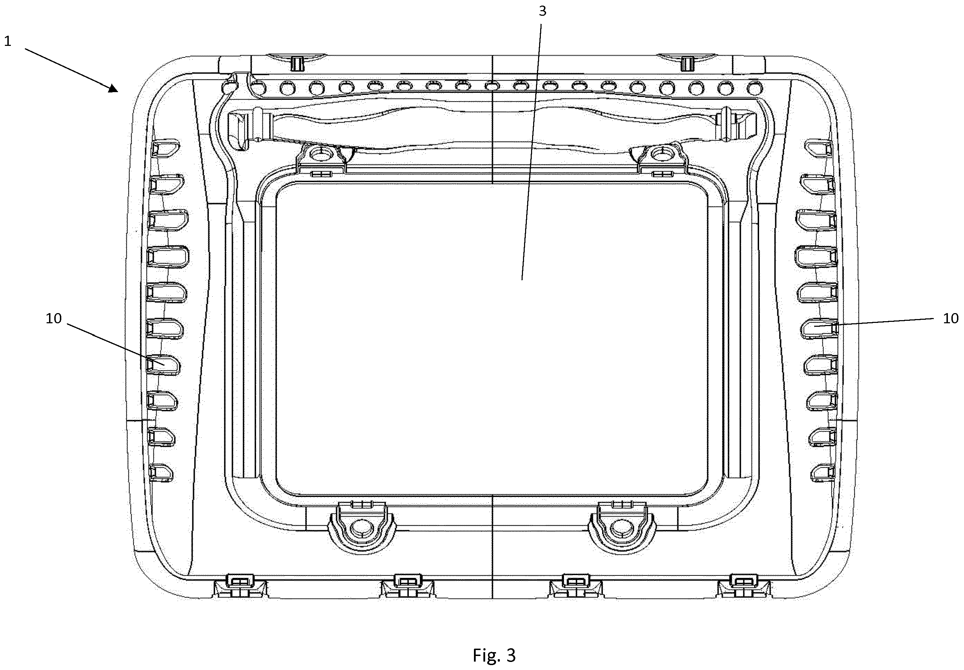

Also with regards to door 8, which advantageously is provided with holes or slits 8' for allowing a better ventilation of the carrier, reversible fastening means of said door 8 to the carrier 100 are provided, which advantageously consist of hinges 11 that act between one of the edges of the door 8 and the corresponding edge of the gap 3, as shown in figures 3 and 4.

Advantageously, the carrier 100 is equipped with a handle 12 which is fastened to one of the two half-shells 1 and 2 (in this case it is fastened to half-shell 1) in order to facilitate the transport of the carrier 100 by the user.

From a practical viewpoint, the user opens the carrier, thus opening wide the two half-shells 1 and 2 by means of the rotation about the hinges 9 when the user wants to clean the inside of the carrier or in any case perform any maintenance operation in the aforesaid carrier.

Vice versa, to allow the introduction and removal of the animal into/from the carrier 100, the door 8 is simply required to be opened to allow the entrance of the animal and to be closed when the animal is placed therein.

Both the hinge closing means 9 mutually connecting the two half-shells 1 and 2 and the hinges 11 connecting the door 8 to the carrier 100 are advantageously of the type which, by their rotation, also allows the mutual detachment of the two half-shells 1 and 2, regarding the hinge closing means 9, or the detachment of the door 8 from the half-shell 1 in the case the user wants to do this for any reason, here also for essentially cleaning and maintenance reasons.

According to what is said above, it is apparent that by means of the device of the finding, in particular by causing the height "H" of the two half-shells 1 and 2 substantially to be different from the width "L" of the aforesaid, it is possible to ensure that in normal situations, the carrier 100 is used in the position shown in figure 1, while it may also be used by resting it on the face at the height "H". Thereby, by suitably sizing the value of "H" and "L", it is possible to ensure that the carrier 100 have sizes to be easily arranged under an airplane seat by introducing it from the rear part of the seat itself, in fact the user introduces the carrier 100 under the seat of the passenger in front of him/her after sitting in his/her own seat.

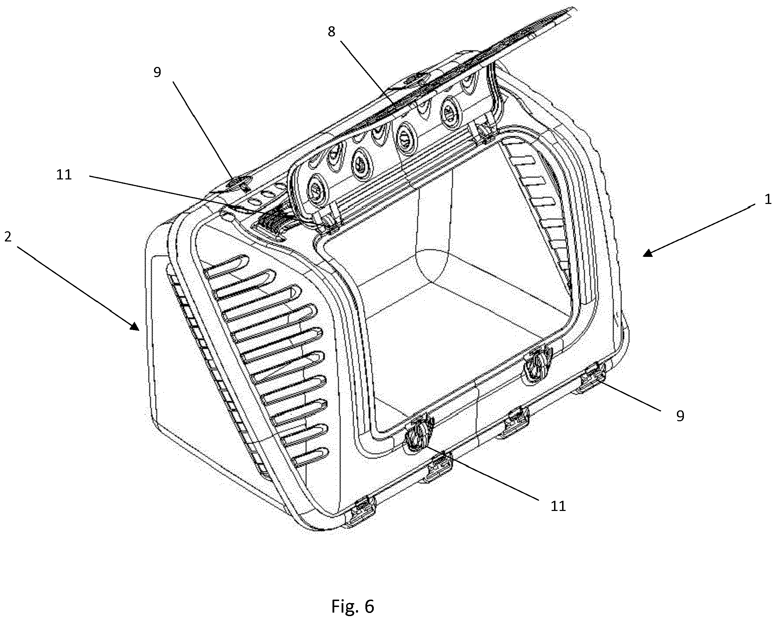

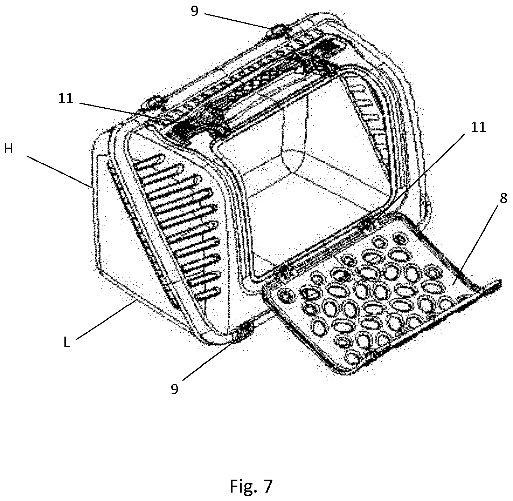

As shown in figures 6 and 7, as mentioned above, the hinges 11 connecting the door 8 to the carrier 100 may be of the type (in itself known) which, in addition to allowing the operation as hinge, also allows the possibility for the user to reversibly detach the door 8, grating or the like, from the carrier 100 when the user believes this to be useful. In particular, it is possible to open the door 8 upwards or downwards, as shown in figures 6 and 7. In practical terms, when the carrier is arranged as shown in said drawings, it will be more convenient to lift the door 8 upwards, while if the carrier were resting on the ground at the side constituting the height "H" of the carrier, the opening of the door 8 shown in fig. 7 would be more advantageous.

It is apparent from that above how the predefined objects set out above are met with the device of the finding, in particular with a particularly simple construction arrangement that can be effectively used by the user in a simple manner.

## Claims

1. PET CARRIER, of the type comprising two half-shells (1, 2) of substantially identical shape and sizes, to be arranged so that they mutually face the respective concavities, said half-shells (1, 2) forming the two halves of a carrier (100), being provided that the two half-shells (1, 2), once arranged mutually on top of each other, form a substantially parallelepiped-shaped structure, at least one of the two half-shells having a resealable gap (3) that can be closed by means of a door (8), or a grating or the like, being also provided means which allow the mutual reversible fastening of said two half-shells (1, 2),
said carrier (100) **being characterized in that** the two half-shells (1, 2) are substantially symmetrical with respect to a plane that intersects side faces (4, 5) of the carrier (100) along a diagonal (7) thereof, and **also in that** the door (8), the grating or the like extends for the most part in correspondence with one of the largest faces (6) of the half-shell (1), said door (8) being reversibly fastened to said half-shell (1).

2. PET CARRIER, according to claim 1, **characterized in that** the mutual connection between the two half-shells (1, 2) is obtained by means of a plurality of hinge closing means (9) arranged at one of the mutual contact edges of the two half-shells (1, 2), said hinge closing means (9), in themselves known, being of the type which, by their rotation, in addition to allowing the mutual detaching of one side of the two half-shells (1, 2) with the subsequent opening like a book of the carrier (100), allows also the mutual complete separation of the two half-shells (1, 2) based on the wishes of the user.

3. PET CARRIER, according to claim 1 or 2, **characterized in that** it provides that the fastening of the door (8), grating or the like, to one of the largest faces (6) of the half-shell (1) at the resealable gap (3), is obtained by means of hinges (11), in themselves known, placed at one of the edges of said gap (3), said hinges (11) being of the type that allows, in addition to the lifting of the door (8), grating or the like from said gap (3) and therefore the subsequent opening of the carrier (100), also the separation of the door (8), grating or the like, from the half-shell (1) to which it is fastened, based on the needs of the user, also being provided that, at the edge opposite to the one in which there are the hinges (11), there are means which allow the reversible fastening of the door (8), grating or the like, to said opposite edge, and therefore the opening of the carrier.

4. PET CARRIER, according to one or more of the preceding claims, **characterized in that** it provides a plurality of ventilation slits (10) at the surface of at least one of the two half-shells (1, 2).

5. PET CARRIER, according to one or more of the preceding claims, **characterized in that** it provides a plurality of shapes or slits (8') at the surface of the door (8), grating or the like.

6. PET CARRIER, according to one or more of the preceding claims, **characterized in that** it provides substantially different sizes (H, L) of the adjacent edges of the two half-shells (1, 2).

7. PET CARRIER, according to one or more of the preceding claims, **characterized in that** the hinges (11) that allow the reversible fastening of the door (8), grating or the like to the carrier (100) as such, are shaped so as to allow such opening at each of the two opposite sides at which there are said hinges (11).
